# EUROPEAN PATENT SPECIFICATION

(11) **EP 2 094 523 B1**
(45) Date of publication and mention of the grant of the patent: **03.11.2010**
(21) Application number: 07852114.3
(22) Date of filing: 17.12.2007
(51) Int. Cl.: B60L 3/04

(54) **A SYSTEM FOR REDUCING THE POWER IN A BATTERY STACK ARRANGEMENT**
SYSTEM ZUR VERRINGERUNG DER ENERGIE IN EINER BATTERIESTAPELANORDNUNG
SYSTÈME DE RÉDUCTION DE COURANT DANS UN AGENCEMENT D'EMPILEMENT DE BATTERIES

(30) Priority: 18.12.2006 SE 0602739
(43) Date of publication of application: 02.09.2009
(73) Proprietor: Nilar International AB, 183 12 Täby (SE)
(72) Inventor: FREDRIKSSON, Lars, 183 51 Täby (SE); PUESTER, Neil H., Aurora, CO 80015-1711 (US)
(74) Representative: Stenborg, Anders Vilhelm
(86) International application number: PCT/SE2007/001112
(87) International publication number: WO 2008/076040

(56) References cited:
- EP-A- 0 638 458
- JP-A- 9 284 904
- US-A- 5 238 083
- US-A- 5 565 711
- US-A1- 2002 162 696
- US-A1- 2005 285 567

## Description

### Technical field

The present invention relates to a system for reducing the power in a battery stack arrangement, especially intended for bipolar batteries in electrically powered vehicles (EPV), or hybrid electrical vehicles (HEV), for reasons of enhanced safety.

### Background to the invention

Batteries used in high power applications, such as vehicle applications, normally are arranged in a battery stack which comprises a plurality of batteries connected in series, or in parallel, held together using a rigid frame. This frame usually comprises end pieces interconnected with tie rods, wherein a desired pressure over the battery stack is maintained during operation.

The battery stack could be designed to a voltage between 60 and 300 Volts, and the amount of energy stored in the battery stack is harmful, and even lethal, to a person if exposed to it by mistake. If the battery stack is involved in an accident, terminals of the battery stack may become accessible and when this occurs a person is in danger of being exposed to the energy stored within the battery stack.

A hybrid electrical vehicle (HEV) or an electrically power vehicle (EPV) contain a battery stack as discussed above. During an accident, it is possible that the terminals of the battery stack are coupled to the chassis of the vehicle and thus endangering rescue personnel when touching the vehicle. This is an unacceptable situation and measures need to be taken to avoid this from happening.

A solution to the problem is to manufacture battery enclosures that can withstand an impact during an accident. However, this is expensive and will increase the weight of the battery stack arrangement.

In JP 09 284904 a system is disclosed in which an impact recognition device and an interrupt mechanism are arranged to break the electric circuit in a battery stack by dividing the battery stack into several battery sub-stacks, each comprising at least one bipolar battery. At impact, the interrupt mechanism is configured to separate the sub-stacks using springs to only break the electrical connection between the sub-stacks.

### Summary of the invention

The object with the present invention is to provide a system that will reduce the possibility of exposing a person to stored energy within a battery stack provided in a vehicle when the vehicle is subject to an accident.

A solution to this object is a system that will break the electric circuit in the battery stack provided in the vehicle. An impact recognition device detects that an impact has taken place, such as an accident. One or more interrupt mechanisms will thereafter divide the battery stack into battery sub-stacks as a result of the detected impact by the impact recognition device. Each battery sub-stack will have a reduced energy storage capacity and will thereby reduce the risk for injuring a person that unintentionally is exposed to the energy in one sub-stack.

An advantage with the present invention is that rescue personnel may approach a vehicle that contain high power battery stack reducing the risk to such personnel.

Still another advantage is that tools needed to remove persons stuck in a vehicle can be used without having to remove the battery stack from the vehicle before commencing the rescue operation.

A further advantage, in a preferred embodiment, is that one or more of the battery sub-stack from a battery stack that has been separated may be reused in a rebuilt battery stack.

Further advantages will be apparent to a skilled person in the art from the following detailed description.

### Brief description of the drawings

Figure 1 shows a prior art embodiment of a circuit-breaking system for a battery stack.
Figure 2 shows an assembled battery stack with a first embodiment of a circuit-breaking system.
Figures 3a and 3b show different embodiments of interrupt mechanisms used in the circuit-breaking system in figure 2
Figure 3c shows an enlarged portion of the circuit-breaking system in figure 2 when the circuit-breaking system has been activated.
Figure 4 shows an assembled battery stack with a second embodiment of a circuit-breaking system.
Figure 5 shows an enlarged portion of the battery stack in figure 4 when the circuit-breaking system has been activated.
Figure 6 illustrates a circuit-breaking system implemented in a vehicle.
Figure 7 shows an assembled battery stack with a third embodiment of a circuit-breaking system.
Figure 8 shows an enlarged portion of the battery stack in figure 7 when the circuit-breaking system has been activated.

### Detailed description of the preferred embodiments

The present invention is intended to be a safety device for use in a vehicle, wherein the electric circuit in a battery stack comprising a plurality of batteries, preferably bipolar batteries, is configured to break and divide the battery stack into a number of sub-stacks when an actuator is trigged. The sub-stack comprises one or more batteries, and the actuator is preferably implemented as an impact recognition device, similar to a device that will trigger airbags in a vehicle to inflate in case of an accident. The amount of energy needed to break the electric circuit is stored within the inventive system in different forms as will be described in connection with the embodiments of the invention.

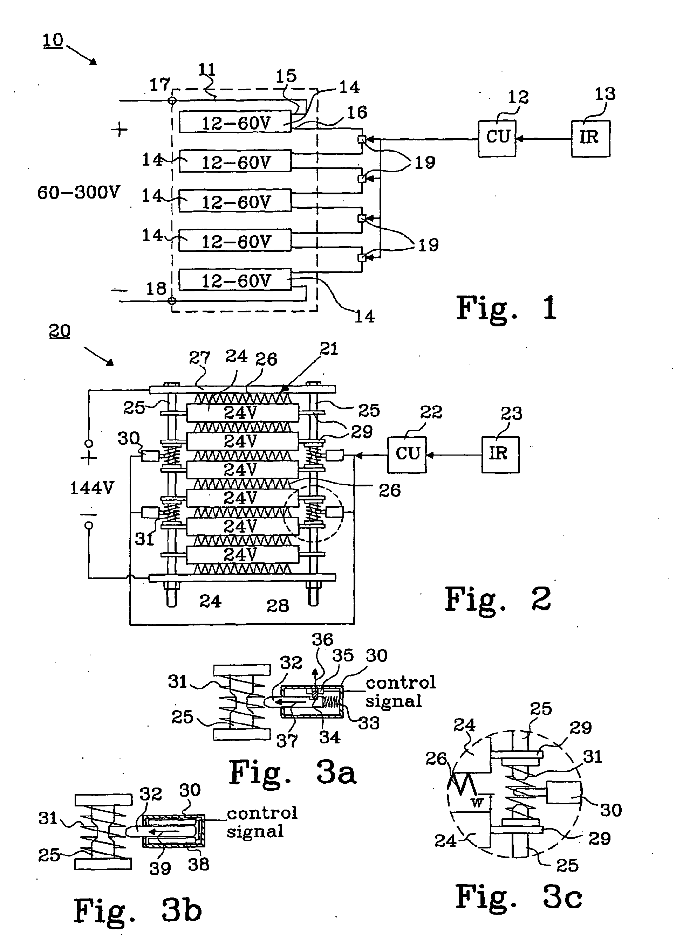

Figure 1 shows a prior art system 10 comprising a battery stack 11, a control unit (CU) 12 and an impact recognition device (IR) 13. The battery stack 11 comprises in this embodiment five batteries 14 comprising at least one battery cell (not shown) connected to a positive terminal 15 and a negative terminal 16, and each battery has a nominal voltage of 12-60 Volts between the positive and the negative terminal. The assembled battery stack has a nominal voltage of 60-300 Volts at the battery stack terminals 17, 18. However, for heavy automotive applications (busses, garbage trucks, etc.) it may be even higher, e.g. up to 600-900 Volts.

The five batteries are connected in series by connecting the positive terminal of one battery with the negative terminal of an adjacent battery via an electric circuit breaker 19, as shown in figure 1. The impact recognition device 13 sends a signal to the control unit 12 when an impact, e.g. cause by an accident, is detected. The control unit 12 activates an interrupt mechanism which is arranged to break the electric circuit in the battery stack. The interrupt mechanism comprises in this embodiment the electric circuit breaker 19, preferably designed in such a way that the electric circuit between two adjacent batteries is maintained provided a control signal from the control unit 12 is present. If an impact is detected, the control unit 12 will cease to send out the control signal and the electric circuit breaker 19 will break the connection between the terminals. The battery stack 11 will be divided into five sub-stacks, each comprising only one battery 14, and the electric circuit in the battery stack 11 will break.

It should be noted that the preferred interrupt mechanism described above, which is readily available for a skilled person in the art, has the advantage that a malfunction in the control unit 12, e.g. loss of supply voltage, will automatically break the electric circuit in the battery stack 11, but the electric circuit may be restored by activating the control signal sent from the control unit 12.

Figure 2 shows a first embodiment of a system 20 for breaking an electric circuit in a battery stack 21. The system further comprises a control unit 22, and an impact recognition device 23. The battery stack 21 comprises six bipolar batteries 24 and the pressure over the bipolar batteries is maintained using tie rods 25. Each bipolar battery 24 comprises at least one battery cell connected to a positive endplate and a negative endplate, and each battery has in this embodiment a nominal voltage of 24 Volts between the positive and the negative endplate. The endplates in a bipolar battery has the same function as the battery terminals described in connection with figure 1. The assembled battery stack 21 has a nominal voltage of 144 Volts at the battery stack terminals 27, 28.

The six bipolar batteries 24 are connected in series between the positive stack terminal 27 and the negative stack terminal 28 using electrically conductive spacing elements 26 in the shape of folded plates, as shown in figure 2. The tie rods 25 could either be made from an insulating material, or be fastened in an insulating manner to the battery stack terminals 27, 28 to prevent a short circuit connection between the battery stack terminals.

The present invention is directed towards an interrupt mechanism to break to electric circuit and divide the battery stack into sub-stacks, and not towards the battery stack arrangement as shown in figure 2, which has been described in a co-pending Swedish patent application SE 0600100-2, assigned to the present applicant, in which further details regarding the actual design of the battery stack may be obtained. Furthermore, alignment guides 29 in each battery casing are attached to prevent the bipolar batteries to move in relation to each other.

The impact recognition device 23 sends a signal to the control unit 22 when an impact is detected, as explained above. The control unit 22 activates an interrupt mechanism 30 which is arranged to break the electric circuit in the battery stack. The interrupt mechanism is in this embodiment electromechanically activated, as shown in more detail in figures 3a and 3b. The interrupt mechanism 30 acts on the tie rods 25 and breaks each tie rod into several parts and the pressure created by the tie rods over the bipolar batteries is removed. Helical springs 31 are released from a compressed state and will push batteries away from each other and a distance "w" will appear between the battery terminal of a bipolar battery 24 and an electrically conductive spacing element 26, which preferably is attached to the battery endplate on an adjacent bipolar battery 24 using a conductive adhesive, see figure 3c.

In this embodiment, the interrupt mechanism 30 will break each tie rod 25 at two positions and springs 31 will separate the battery stack in such a way that three sub-stacks, each comprising two bipolar batteries, are created when the impact recognition device 23 detects an impact.

Figure 3a shows a partial cross-sectional view of a first embodiment of an interrupt mechanism 30 used in connection with the system described in figure 2. The interrupt mechanism 30 comprises a pin 32, a spring 33, a mechanical latch 34 and a solenoid 35. The spring 33 is compressed in an activated state and acts on the pin 32. The pin 32 is provided with a groove in which a mechanical latch 34 is inserted to hold the pin 32 in an activated position. When the solenoid 35 receives a control signal from the control unit 22, the latch is withdrawn from the groove in the direction of arrow 36 and the pin 32 is released from its activated position and moves forward in the direction of arrow 37 and break the tie rod 25.

In figure 3b an alternative embodiment is described wherein a solenoid 38 is controlled by a control signal from the control unit 22 and moves the pin 32 forward in the direction of arrow 39 and break the tie rod 25.

The solenoid is preferably implemented as a loop of wire wrapped around a metallic core, which produces a magnetic field when an electrical current is passed through it. The strength of the magnetic field can be controlled and the solenoid may be used as electromagnets. The purpose of the solenoid is to convert energy into a linear motion, and the operation and construction of solenoids are known to a skilled person in the art and will thus not be described in more detail.

It should be noted that in order to perform the invention and reduce the power in a battery stack being held together with a tie rod arrangement, as illustrated in connection with figure 2, only one of the interrupt mechanisms along the length of each tie rod is necessary. The reasons for having a multiple of interrupt mechanisms are, except for the safety by redundancy, to ensure that created the sub-stacks will not have more than a predetermined amount of power.

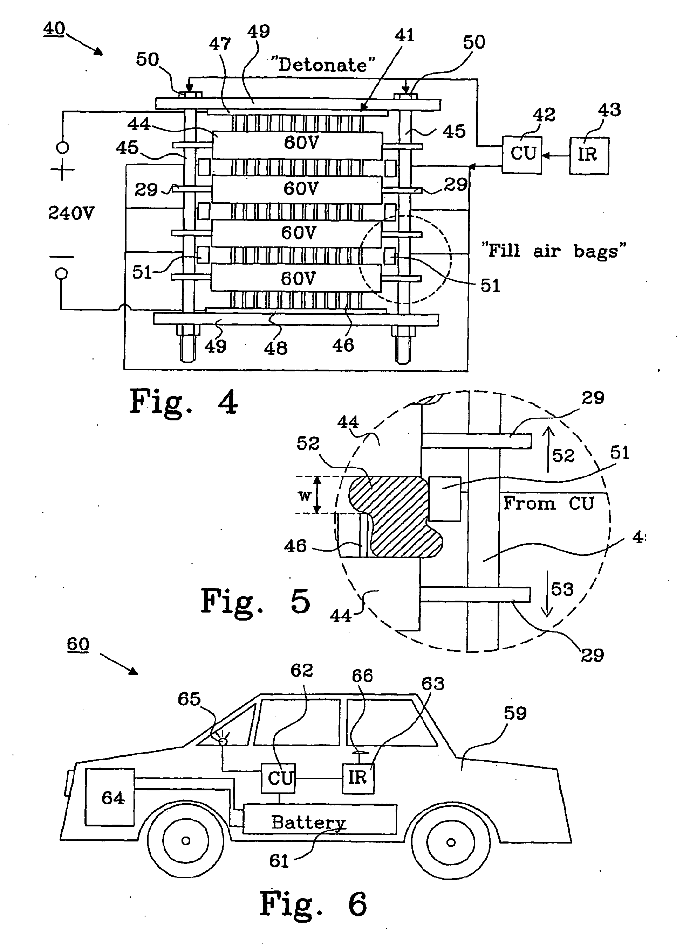

Figure 4 shows an assembled battery stack 41 with a second embodiment of a circuit-breaking system 40. The system further comprises a control unit 42, and an impact recognition device 43. The battery stack 41 comprises four bipolar batteries 44 and the pressure over the bipolar batteries is maintained using tie rods 45. Each bipolar battery 44 comprises at least one battery cell connected to a positive endplate and a negative endplate, and each battery has in this embodiment a nominal voltage of 60 Volts between the positive and the negative endplate. The assembled battery stack 41 has a nominal voltage of 240 Volts at the battery stack terminals 47, 48.

The four bipolar batteries 44 are connected in series between the positive stack terminal 47 and the negative stack terminal 48 using electrically conductive spacing elements 46 in the shape of pins, as shown in figure 4. A pressure over the battery stack 41 is maintained by providing rigid plates 49 on either side of the battery stack 41 through which the tie rods 45 are tightened. Each plate 49 is placed adjacently to one of the battery stack terminals 47 and 48. If the plates are made from an electrically conductive material, the tie rods 45 could either be made from an insulating (non-conductive) material, or be fastened in an insulating manner to the plates 49 to prevent a short circuit connection between the battery stack terminals 47 and 48. On the other hand, if the plates are made from a non-conductive material, the tie rods 45 could be made from any type of material, preferably a metallic material.

As mentioned above, the present invention is directed towards an interrupt mechanism to break to electric circuit and divide the battery stack into sub-stacks, and not towards the battery stack arrangement as shown in figure 4, which has been described in a co-pending Swedish patent application SE 0600100-2, assigned to the present applicant, in which further details regarding the actual design of the battery stack may be obtained. Furthermore, alignment guides 29 in each battery casing are attached to prevent the bipolar batteries 44 to move in relation to each other.

The impact recognition device 43 sends a signal to the control unit 42 when an impact is detected, as explained above. The control unit 42 activates an interrupt mechanism which is arranged to break the electric circuit in the battery stack 41. The interrupt mechanism comprises in this embodiment of two independently controlled mechanisms. The first mechanism will remove the pressure over the battery stack, and the second mechanism will break the electric circuit by separating the bipolar batteries 44 from each other.

The first mechanism comprises explosive bolts 50 (also called pyrotechnic fasteners) which are incorporated in the tie rods 45 that can be initiated by a remote command. Explosive charges embedded within the bolts and activated (precisely controlled) by an electric current ("Detonate" signal) from the control unit 42 instantly break the bolt into two or three pieces. The bolt is typically scored around its circumference at the point(s) where the severance should occur. Upon detonation a selected part of the fastener rapidly disassembles without producing any shrapnel or fragments, freeing the mated plates 49 from each other. Explosive bolts are lighter and far more reliable than mechanical latches. The term pyrotechnic fastener may naturally also include a nut within which two pyrotechnical charges may be arranged that splits the nut into two pieces when activated.

When the pressure over the battery stack 41 is removed, the second mechanism, inflating air bags, is activated. Air bag inflating units 51 are provided between two adjacent bipolar batteries 44 in such a way that when airbags 52 are inflated, as illustrated in figure 5, they will move apart as indicated by the arrows 52 and 53. A distance "w" will appear between the bipolar batteries 44, and thus the electric circuit in the battery stack is broken. The pins 46 are preferably attached to the battery endplate of one of the bipolar batteries 44 using a conductive adhesive, see figure 5.

The air bag inflating units 51 are well known in the prior art, wherein an electronic control signal "Fill the airbags" will release a gas that will inflate the air bags to conduct the function described above. In an alternative embodiment, one air bag inflating unit 51 may be used for inflating several, or all, present air bags in the system to ensure more or less simultaneous inflated air bags 52.

Figure 6 illustrates a circuit-breaking system 60 to break the electric circuit in a battery stack 61 implemented in a vehicle 59. The circuit breaking system 60 comprises a control unit 62, an impact recognition device 63, and an interrupt mechanism (which is built into the battery stack 61) according to any of the described embodiment above. The vehicle 59 is a hybrid electrical vehicle (HEV), or an electrically power vehicle (EPV), containing a battery stack 61 for providing energy to an engine 64. The system 60 further comprises the optional features: an indicator 65 that will indicate that the interrupt mechanism in the circuit breaking system 60 has been activated; and a manually release 66 provided in the impact recognition device 63, whereby the breaking of the electric circuit in the battery stack 61 may be manually operated.

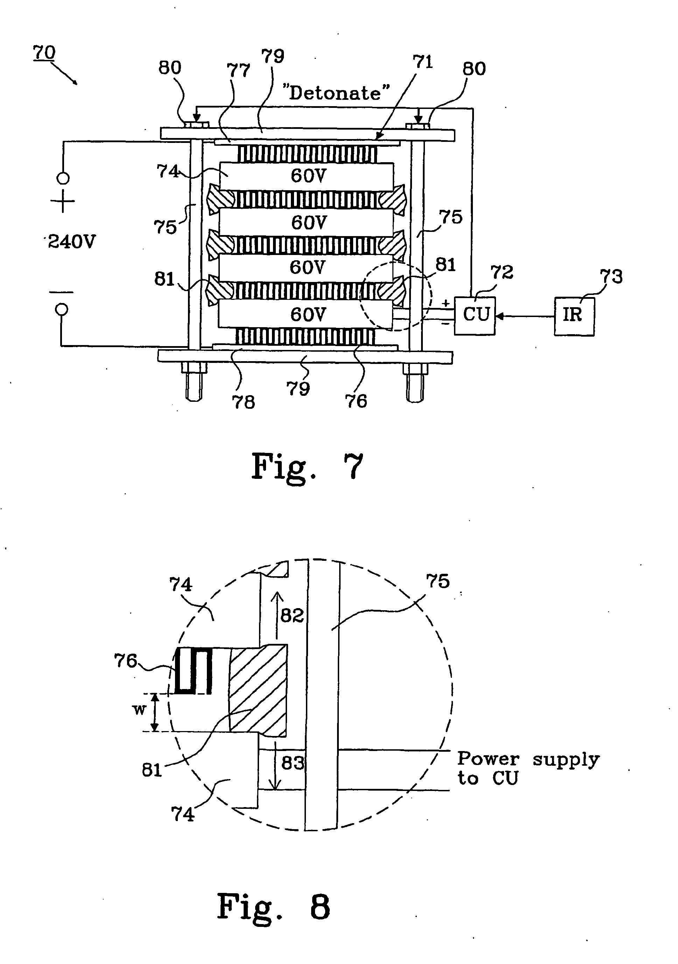

Figure 7 shows an assembled battery stack 71 with a third embodiment of a circuit-breaking system 70. The system further comprises a control unit 72, and an impact recognition device 73. The battery stack 71 comprises four bipolar batteries 74 and the pressure over the bipolar batteries is maintained using tie rods 75. Each bipolar battery 74 comprises at least one battery cell connected to a positive endplate and a negative endplate, and each battery has in this embodiment a nominal voltage of 60 Volts between the positive and the negative endplate. The assembled battery stack 71 has a nominal voltage of 240 Volts at the battery stack terminals 77, 78.

The four bipolar batteries 74 are connected in series between the positive stack terminal 77 and the negative stack terminal 78 using electrically conductive spacing elements 76 in the shape of meander shaped folded plates, as shown in figure 7. A pressure over the battery stack 71 is maintained by providing rigid plates 79 on either side of the battery stack 71 through which the tie rods 75 are tightened. Each plate 79 is placed adjacently to one of the battery stack terminals 77 and 78, as previously described in connection with figure 4.

A battery stack arrangement, as shown in figure 7, has been described in a co-pending Swedish patent application SE 0600100-2, assigned to the present applicant, in which further details regarding the actual design of the battery stack may be obtained.

The impact recognition device 73 sends a signal to the control unit 72 when an impact is detected, as explained above. The control unit 72, which in this embodiment is powered directly from one of the bipolar batteries 74 in the battery stack 71 to further secure the supply of power to the control unit 72 in case of an accident, activates an interrupt mechanism which is arranged to break the electric circuit in the battery stack 71. The interrupt mechanism comprises in this embodiment of only one controlled mechanism that will remove the pressure over the battery stack 71, and as a result of this the electric circuit is broken by the built-in expanding properties of at least one device inserted between each adjacent bipolar battery 74 that will separate the bipolar batteries 74 from each other.

The controlled mechanism comprises, as described above explosive bolts 80 (also called pyrotechnic fasteners) which are incorporated in the tie rods 75 that can be initiated by a remote command. The device with the built-in expanding properties could be implemented, as illustrated in figure 7, as at least one compressed elastic member 81. Further possible implementations include compressed springs, or any other material with expanding properties.

When the pressure over the battery stack 71 is removed, the elastic member 81 will strive to regain its uncompressed shape. When doing so two adjacent bipolar batteries 74 will move apart as indicated by the arrows 82 and 83 in figure 8. A distance "w" will appear between the bipolar batteries 74, and thus the electric circuit in the battery stack is broken. The folded plate 76 is preferably attached to the battery endplate of one of the bipolar batteries 74 using a conductive adhesive, see figure 8.

## Claims

1. A system (20; 40; 60; 70) for breaking an electric circuit in a battery stack (21; 41; 61; 71) arranged in a vehicle (59), wherein said battery stack comprises a plurality of batteries (24; 44; 74), each battery comprises at least one battery cell connected to a positive terminal and a negative terminal, wherein an electric current flows between the positive terminal and a negative terminal of adjacently arranged batteries during operation, said system comprises
- an impact recognition device (23; 43; 63; 73) connected to a control unit (22; 42; 62; 72), and
- at least one interrupt mechanism (30; 50, 51; 80 ) which is controlled by said control unit (22; 42; 62; 72) and arranged to break the electric circuit in the battery stack (21; 41; 61; 71) to divide said battery stack into several battery sub-stacks when said impact recognition device (23; 43; 63; 73) detects an impact, **characterized in that** said batteries are bipolar batteries and said battery sub-stacks comprises at least one bipolar battery (24; 44; 74), wherein pressure over the bipolar batteries (24; 44; 74) in the battery stack (21; 41; 71) is maintained using one or more tie rods (25; 45; 75) to keep said electric circuit in the battery stack, and the interrupt mechanism (30; 50; 80) is configured to remove the pressure created by the tie rods (25; 45; 75) to break said electric circuit in the battery stack when the impact recognition device (23; 43; 73) detects an impact, and the interrupt mechanism further comprises an expanding unit (31; 51, 52; 81) configured to separate and to move the sub-stacks apart causing a distance "w" to appear between adjacent battery sub-stacks when the pressure is removed.

2. The system according to claim 1, wherein the interrupt mechanism further comprises a pyrotechnical fastener (50; 80) which is activated when the impact recognition device (43; 73) detects an impact to initiate the separation process by removing the pressure created by the tie rods (45; 75).

3. The system according to any of claims 1-2, wherein the expanding unit comprises one or more devices having a built-in spring force.

4. The system according to claim 3, wherein said device is a helical spring (31) which is compressed before the impact recognition device (23) is activated.

5. The system according to claim 3, wherein said device is an elastic member (81) which is compressed before the impact recognition device (73) is activated.

6. The system according to any of claims 1-2, wherein the expanding unit comprises one or more airbags (51, 52).

7. The system according to any of claims 1-6, wherein the positive terminal and the negative terminal of each bipolar battery is a positive endplate and a negative endplate, respectively, and the electric current flows laterally through an intermediate electrically conductive spacing element (26; 46; 76) arranged between the positive endplate and an adjacently arranged negative endplate.

8. The system according to claim 7, wherein the spacing element (26; 46; 76) is conductively secured to one of the positive or the adjacently arranged negative endplate in the battery stack (21; 41; 71).

9. The system according to any of claims 1-8, wherein said impact recognition device (63) is provided with a manual release (66), whereby the breaking of the electric circuit in the battery stack (61) may be manually operated.

10. The system according to any of claims 1-9, wherein said system further is provided with an indicator (65), which indicator indicates if any of said interrupt mechanism has been activated.

11. A vehicle (59) provided with an electrically power engine (64), a battery stack (61) comprising a plurality of batteries (24; 44; 74), an impact recognition device (63), an interrupt mechanism which is arranged to break the electric circuit in the battery stack (61) to divide said battery stack into several battery sub-stacks when said impact recognition device (63) detects an impact, **characterized in that** said batteries are bipolar batteries, said battery sub-stacks comprises at least one bipolar battery, said vehicle is further provided with a system for breaking an electric circuit in the battery stack (61) as defined in any of claims 1-10, and tie rods (25; 45; 75) to maintain pressure over the bipolar batteries (24; 44; 74) and to keep an electric circuit in the battery stack (21; 41; 71) and the interrupt mechanism (30; 50; 80) is configured to remove the pressure created by the tie rods (25; 45; 75) to break the electric circuit in the battery stack when the impact recognition device (23; 43; 73) detects an impact, and the interrupt mechanism further comprises an expanding unit configured to separate and to move the sub-stacks apart causing a distance "w" to appear between adjacent battery sub-stacks when the pressure is removed.

12. The vehicle according to claim 11, wherein said impact recognition device (63) is provided with a manual release (66), whereby the breaking of the electric circuit in the battery stack (61) may be manually operated.

13. The vehicle according to any of claims 11-12, wherein said vehicle (59) further is provided with an indicator (65), which indicator indicates if any of said interrupt mechanism has been activated.

## Patentansprüche

1. System (20; 40; 60; 70) zum Ausschalten eines in einem Fahrzeug (59) angeordneten elektrischen Stromkreises in einem Batteriestapel (21; 41; 61; 71), wobei besagter Batteriestapel aus einer Pluralität von Batterien (24; 44; 74) besteht und jede Batterie aus mindestens einer Batteriezelle besteht, die mit einem positiven Anschluss und einem negativen Anschluss verbunden ist, wobei während des Betriebs ein elektrischer Strom zwischen dem positiven Anschluss und einem negativen Anschluss von angrenzend angeordneten Batterien fließt, besagtes System bestehend aus
- einer Aufprallerkennungsvorrichtung (23; 43; 63; 73), die mit einem Steuerungsgerät (22; 42; 62; 72) verbunden ist, und
- mindestens einem Unterbrechungsmechanismus (30; 50; 51; 80), der durch besagtes Steuerungsgerät (22; 42; 62; 72) gesteuert wird und derart angeordnet ist, um den elektrischen Stromkreis in dem Batteriestapel (21; 41; 61; 71) auszuschalten, um den besagten Batteriestapel in mehrere Batteriesubstapel zu teilen, wenn besagte Aufprallerkennungsvorrichtung (23; 43; 63; 73) einen Aufprall ermittelt, **dadurch gekennzeichnet, dass** besagte Batterien bipolare Batterien sind und besagte Batteriesubstapel aus mindestens einer bipolaren Batterie (24; 44; 74) bestehen, wobei der Druck auf die bipolaren Batterien (24; 44; 74) in dem Batteriestapel (21; 41; 71) **dadurch** beibehalten wird, dass eine oder mehrere Verbindungsstangen (25; 45; 75) benutzt werden, um besagten elektrischen Stromkreis in dem Batteriestapel zu halten, **und dass** der Unterbrechungsmechanismus (30; 50; 80) zur Entfernung des durch die Verbindungsstangen (25; 45; 75) erzeugten Drucks konfiguriert ist, um besagten elektrischen Stromkreis im Batteriestapel auszuschalten, wenn die Aufprallerkennungsvorrichtung (23; 43; 73) einen Aufprall ermittelt, **und dass** der Unterbrechungsmechanismus weiterhin aus einem Verstellgerät (31; 51; 52; 81) besteht, das zur Trennung und zum Auseinanderziehen der Substapel konfiguriert ist, wodurch eine Entfernung "w" zwischen den angrenzenden Batteriesubstapeln auftritt, wenn der Druck entfernt wird.

2. System nach Anspruch 1, wobei der Unterbrechungsmechanismus weiterhin aus einem pyrotechnischen Befestigungselement (50; 80) besteht, das aktiviert wird, wenn die Aufprallerkennungsvorrichtung (43; 73) einen Aufprall ermittelt, um das Trennungsverfahren einzuleiten, indem der durch die Verbindungsstangen (45; 75) erzeugte Druck entfernt wird.

3. System nach jedem der Ansprüche 1 bis 2, wobei das Verstellgerät aus einem oder mehreren Vorrichtungen besteht, die einen eingebauten Federdruck aufweisen.

4. System nach Anspruch 3, wobei besagte Vorrichtung eine Schraubenfeder (31) ist, die vor Aktivierung der Aufprallerkennungsvorrichtung (23) komprimiert wird.

5. System nach Anspruch 3, wobei besagte Vorrichtung ein elastisches Element (81) ist, das vor Aktivierung der Aufprallerkennungsvorrichtung (73) komprimiert wird.

6. System nach jedem der Ansprüche 1 bis 2, wobei das Verstellgerät aus einem oder mehreren Airbags (51; 52) besteht.

7. System nach jedem der Ansprüche 1 bis 6, wobei der positive Anschluss und der negative Anschluss jeder bipolaren Batterie jeweils eine positive Endplatte und eine negative Endplatte ist und der elektrische Strom horizontal durch einen dazwischen liegenden elektrisch leitfähigen Abstandhalter (26; 46; 76) fließt, der zwischen der positiven Endplatte und einer angrenzend angeordneten negativen Endplatte angeordnet ist.

8. System nach Anspruch 7, wobei der Abstandhalter (26; 46; 76) an eine der positiven oder der angrenzend angeordneten negativen Endplatten in dem Batteriestapel (21; 41; 71) leitfähig gesichert ist.

9. System nach jedem der Ansprüche 1 bis 8, wobei besagte Aufprallerkennungsvorrichtung (63) mit einem Handauslöser (66) bereitgestellt wird, wodurch das Ausschalten des elektrischen Stromkreises in dem Batteriestapel (61) manuell betrieben werden kann.

10. System nach jedem der Ansprüche 1 bis 9, wobei besagtes System weiterhin mit einem Indikator (65) bereitgestellt wird, wobei der Indikator anzeigt, ob einer der besagten Unterbrechungsmechanismen aktiviert worden ist.

11. Fahrzeug (59), bereitgestellt mit einem elektrisch angetriebenen Motor (64), einem Batteriestapel (61), bestehend aus einer Pluralität von Batterien (24; 44; 74), einer Aufprallerkennungsvorrichtung (63), einem Unterbrechungsmechanismus, der zum Ausschalten des elektrischen Stromkreises im Batteriestapel (61) angeordnet ist, um besagten Batteriestapel in mehrere Batteriesubstapel zu trennen, wenn besagte Aufprallerkennungsvorrichtung (63) einen Aufprall ermittelt, **dadurch gekennzeichnet, dass** besagte Batterien bipolare Batterien sind, besagte Batteriesubstapel aus mindestens einer bipolaren Batterie bestehen, besagtes Fahrzeug weiterhin mit einem System zum Ausschalten eines elektrischen Stromkreises in dem wie in jedem der Ansprüche 1 bis 10 definierten Batteriestapel (61) und Verbindungsstangen (25; 45; 75) bereitgestellt wird, um den Druck auf die bipolaren Batterien (24; 44; 74) beizubehalten und um einen elektrischen Stromkreis in dem Batteriestapel (21; 41; 71) zu halten, **und dass** der Unterbrechungsmechanismus (30; 50; 80) zum Entfernen des Drucks konfiguriert ist, der durch die Verbindungsstangen (25; 45; 75) erzeugt wird, um den elektrischen Stromkreis in dem Batteriestapel auszuschalten, wenn die Aufprallerkennungsvorrichtung (23; 43; 73) einen Aufprall ermittelt, **und dass** der Aufprallmechanismus weiterhin aus einem Verstellgerät besteht, das zur Trennung und zum Auseinanderziehen der Substapel konfiguriert ist, wodurch eine Entfernung "w" zwischen den angrenzenden Batteriesubstapeln auftritt, wenn der Druck entfernt wird.

12. Fahrzeug nach Anspruch 11, wobei besagte Aufprallerkennungsvorrichtung (63) mit einem Handauslöser (66) bereitgestellt wird, wodurch das Ausschalten des elektrischen Stromkreises in dem Batteriestapel (61) manuell betrieben werden kann.

13. Fahrzeug nach jedem der Ansprüche 11 bis 12, wobei besagtes Fahrzeug (59) weiterhin mit einem Indikator (65) bereit gestellt wird, wobei der Indikator anzeigt, ob einer der besagten Unterbrechungsmechanismen aktiviert worden ist.

## Revendications

1. Système (20 ; 40 ; 60 ; 70) destiné à couper un circuit électrique dans un empilement de batteries (21 ; 41 ; 61 ; 71) disposé dans un véhicule (59), dans lequel ledit empilement de batteries comprend une pluralité de batteries (24 ; 44 ; 74), chaque batterie comprenant au moins un élément de batterie relié à une borne positive et à une borne négative, dans lequel un courant électrique circule entre la borne positive et une borne négative de batteries disposées de manière adjacente en fonctionnement, ledit système comprenant
- un dispositif de reconnaissance d'impact (23 ; 43 ; 63 ; 73) relié à une unité de commande (22 ; 42 ; 62 ; 72), et
- au moins un mécanisme de disjonction (30 ; 50 ; 51 ; 80 ) qui est commandé par ladite unité de commande (22 ; 42 ; 62 ; 72) et disposé pour couper le circuit électrique dans l'empilement de batteries (21 ; 41 ; 61 ; 71) afin de diviser ledit empilement de batteries en plusieurs sous-empilements de batteries lorsque ledit dispositif de reconnaissance d'impact (23 ; 43 ; 63 ; 73) détecte un impact, **caractérisé en ce que** lesdites batteries sont des batteries bipolaires et lesdits sous-empilements de batteries comprennent au moins une batterie bipolaire (24 ; 44 ; 74), dans lequel la pression exercée sur les batteries bipolaires (24 ; 44 ; 74) dans l'empilement de batteries (21 ; 41 ; 71) est maintenue au moyen d'une ou plusieurs barres d'assemblage (25 ; 45 ; 75) pour retenir ledit circuit électrique dans l'empilement de batteries, et le mécanisme de disjonction (30 ; 50 ; 80) est configuré pour relâcher la pression créée par les barres d'assemblage (25 ; 45 ; 75) afin de couper ledit circuit électrique dans l'empilement de batteries lorsque le dispositif de reconnaissance d'impact (23 ; 43 ; 73) détecte un impact, et le mécanisme de disjonction comprend en outre une unité d'expansion (31 ; 51 ; 52 ; 81) configurée pour séparer et éloigner les sous-empilements les uns des autres entraînant ainsi l'apparition d'une distance « w » entre des sous-empilements de batteries adjacentes lorsque la pression est relâchée.

2. Système selon la revendication 1, dans lequel le mécanisme de disjonction comprend en outre un pièce d'attache pyrotechnique (50 ; 80) qui est activée lorsque le dispositif de reconnaissance d'impact (43 ; 73) détecte un impact afin de lancer le processus de séparation en relâchant la pression créée par les barres d'assemblage (45 ; 75).

3. Système selon l'une quelconque des revendications 1 à 2, dans lequel l'unité d'expansion comprend un ou plusieurs dispositifs présentant une force de ressort intégrée.

4. Système selon la revendication 3, dans lequel ledit dispositif est un ressort hélicoïdal (31) qui est comprimé avant que le dispositif de reconnaissance d'impact (23) soit activé.

5. Système selon la revendication 3, dans lequel ledit dispositif est un élément élastique (81) qui est comprimé avant que le dispositif de reconnaissance d'impact (73) soit activé.

6. Système selon l'une quelconque des revendications 1 à 2, dans lequel l'unité d'expansion comprend un ou plusieurs coussins d'air (51, 52).

7. Système selon l'une quelconque des revendications 1 à 6, dans lequel la borne positive et la borne négative de chaque batterie bipolaire sont des plaques terminals positive et négative, respectivement, et le courant électrique circule latéralement à travers un élément d'espacement (26 ; 46 ; 76) conducteur intermédiaire disposé entre la plaque terminale positive et une plaque terminale négative disposée de manière adjacente.

8. Système selon la revendication 7, dans lequel l'élément d'espacement (26 ; 46 ; 76) est fixé de manière conductrice à la plaque terminale positive ou à la plaque terminale négative disposée de manière adjacente dans l'empilement de batteries (21 ; 41 ; 71).

9. Système selon l'une quelconque des revendications 1 à 8, dans lequel ledit dispositif de reconnaissance d'impact (63) est équipé d'un mécanisme de libération manuelle (66), par lequel la coupure du circuit électrique dans l'empilement de batteries (61) peut être réalisée manuellement.

10. Système selon l'une quelconque des revendications 1 à 9, dans lequel ledit système est en outre équipé d'un indicateur (65), lequel indicateur indique si l'un quelconque desdits mécanismes de disjonction a été activé.

11. Véhicule (59) équipé d'un moteur électrique (64), d'un empilement de batteries (61) comprenant une pluralité de batteries (24 ; 44 ; 74), d'un dispositif de reconnaissance d'impact (63), d'un mécanisme de disjonction qui est disposé pour permettre de couper le circuit électrique dans l'empilement de batteries (61) afin de diviser ledit empilement de batteries en plusieurs sous-empilements de batteries lorsque ledit dispositif de reconnaissance d'impact (63) détecte un impact, **caractérisé en ce que** lesdites batteries sont des batteries bipolaires, lesdits sous-empilements de batteries comprennent au moins une batterie bipolaire, ledit véhicule est en outre équipé d'un système de coupure d'un circuit électrique dans l'empilement de batteries (61) comme défini dans l'une quelconque des revendications 1 à 10, et de barres d'assemblage (25 ; 45 ; 75) pour maintenir une pression exercée sur les batteries bipolaires (24 ; 44 ; 74) et pour retenir un circuit électrique dans l'empilement de batteries (21 ; 41 ; 71) et le mécanisme de disjonction (30 ; 50 ; 80) est configuré pour relâcher la pression créée par les barres d'assemblage (25 ; 45 ; 75) afin de couper le circuit électrique dans l'empilement de batteries lorsque le dispositif de reconnaissance d'impact (23 ; 43 ; 73) détecte un impact, et le mécanisme de disjonction comprend en outre une unité d'expansion configurée pour séparer et éloigner les sous-empilements les uns des autres entraînant ainsi l'apparition d'une distance « w » entre des sous-empilements de batteries adjacentes lorsque la pression est relâchée.

12. Véhicule selon la revendication 11, dans lequel ledit dispositif de reconnaissance d'impact (63) est équipé d'un mécanisme de libération manuelle (66), par lequel la coupure du circuit électrique dans l'empilement de batteries (61) peut être réalisée manuellement.

13. Véhicule selon l'une quelconque des revendications 11 à 12, dans lequel ledit véhicule (59) est en outre équipé d'un indicateur (65), lequel indicateur indique si l'un quelconque desdits mécanismes de disjonction a été activé.
